# EUROPEAN PATENT APPLICATION

(11) **EP 4 744 758 A1**
(43) Date of publication of application: **20.05.2026**
(21) Application number: 24839761.4
(22) Date of filing: 09.07.2024
(51) Int. Cl.: B01D 53/32, B01D 53/62

(54) **CARBON DIOXIDE CONCENTRATOR**

(30) Priority: 11.07.2023 JP 2023113556
(71) Applicant: Nippon Kayaku Kabushiki Kaisha, Tokyo 100-0005 (JP)
(72) Inventor: MITSUI, Keisuke, Tokyo 115-8588 (JP); KAIHO, Atsushi, Tokyo 115-8588 (JP); NAKAJIMA, Tomoya, Tokyo 115-8588 (JP)
(74) Representative: Hentrich Patent- & Rechtsanwaltspartnerschaft mbB
(86) International application number: PCT/JP2024/024821
(87) International publication number: WO 2025/013871

(57) **Abstract**

The present invention relates to a carbon dioxide concentrator comprising: a first electrode that is a cathode; a second electrode that is separately disposed from the first electrode and that is an anode; and at least one electrolyte liquid that is contained between the first electrode and the second electrode and that is present in contact with the first electrode and the second electrode, wherein the at least one electrolyte liquid contains: a compound represented by a following formula (1) or a salt thereof; and water, 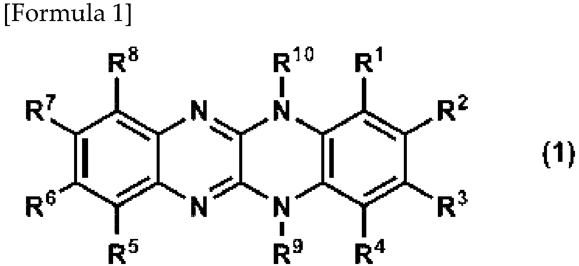 in the formula (1), R¹ to R¹⁰ each independently represent a hydrogen atom, an alkyl group, a hydroxy group or a salt thereof, an alkoxy group, a nitro group, an amino group, a mercapto group, a cyano group, a halogen group, an aryl group, a sulfone group or a salt thereof, a carboxyl group or a salt thereof, a carbonyl group, a sulfonyl group, or a heteroaryl group.

## Description

### Technical Field

The present invention relates to a carbon dioxide concentrator.

### Background Art

In recent years, an attempt in which carbon dioxide, considered to be a cause of the global warming, is recovered from the atmosphere and exhaust gas of factories to be stored in the ground or to be recycled has been furthermore activated. As a means for recovering carbon dioxide, a method using an electrochemical apparatus is known. For example, Patent Literatures 1 and 2 each disclose a device that can enrich carbon dioxide by utilizing an electrochemical reaction of oxygen generation/oxygen reduction to cause dissolution of carbon dioxide into an electrolyte liquid and release it.

Meanwhile, to further improve recovering efficiency of carbon dioxide, development of a novel carbon dioxide concentrator that utilizes the electrochemical reaction to selectively extract carbon dioxide and that can enrich it is desired.

### Document List

### Patent Literatures

Patent Literature 1: International Publication No. WO 2012/164912
Patent Literature 2: International Publication No. WO 2012/164913

### Summary of Invention

### Technical Problem

An object of the present invention is to provide a novel carbon dioxide concentrator that exhibits characteristics in which the electrochemical reaction is utilized to be able to selectively concentrate carbon dioxide.

### Solution to Problem

The present inventors have made intensive investigation, and consequently obtained a finding that using a compound having a fluoflavine skeleton exhibiting a predetermined structure as a mediator in the electrochemical method can generate a gradient of pH between electrodes via an oxidation-reduction reaction in an electrolyte liquid. As a result, the present inventors have found that a novel carbon dioxide concentrator that exhibits the characteristics in which the electrochemical reaction is utilized to be able to selectively concentrate carbon dioxide can be provided. This finding has led to completion of the present invention.

A carbon dioxide concentrator according to an embodiment of the present invention comprises: a first electrode that is a cathode; a second electrode that is separately disposed from the first electrode and that is an anode; and at least one electrolyte liquid that is contained between the first electrode and the second electrode and that is present in contact with the first electrode and the second electrode,
wherein the at least one electrolyte liquid contains: a compound represented by a following formula (1) or a salt thereof; and water, 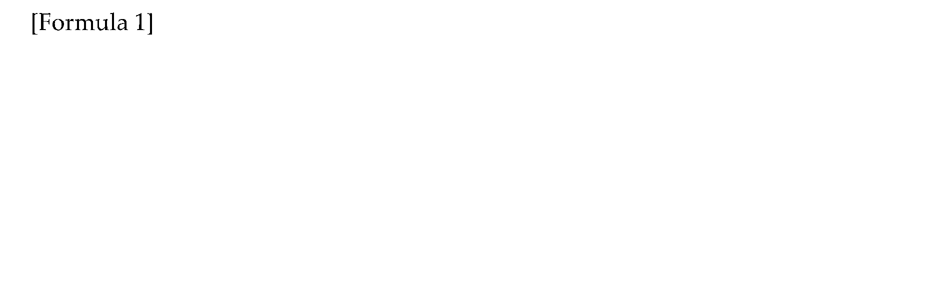 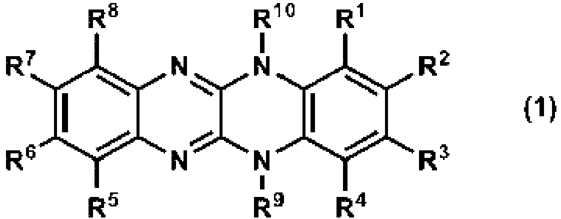
in the formula (1), R¹ to R¹⁰ each independently represent a hydrogen atom, an alkyl group, a hydroxy group or a salt thereof, an alkoxy group, a nitro group, an amino group, a mercapto group, a cyano group, a halogen group, an aryl group, a sulfone group or a salt thereof, a carboxyl group or a salt thereof, a carbonyl group, a sulfonyl group, or a heteroaryl group.

In one embodiment of the present invention, in the formula (1), at least one of R¹ to R⁸ represents a sulfone group or a salt thereof.

In one embodiment of the present invention, in the formula (1), at least two of R¹ to R⁸ represent a sulfone group or a salt thereof.

In one embodiment of the present invention, in the formula (1), at least one of R¹ to R⁸ represents a group selected from a group consisting of an alkyl group, an alkoxy group, a halogen group, and a carboxyl group or a salt thereof.

In one embodiment of the present invention, the carbon dioxide concentrator further comprises a diaphragm between the first electrode and the second electrode.

In one embodiment of the present invention, the carbon dioxide concentrator comprises: a first electrolyte liquid that is contained between the first electrode and the diaphragm and that is present in contact with the first electrode; and a second electrolyte liquid that is contained between the second electrode and the diaphragm and that is present in contact with the second electrode, wherein the first electrolyte liquid contains: the compound represented by the formula (1) or a salt thereof; and water.

In one embodiment of the present invention, the first electrolyte liquid and the second electrolyte liquid are electrolyte liquids different from each other.

### Effects of Invention

According to the present invention, an object thereof is to provide a novel carbon dioxide concentrator that exhibits characteristics in which the electrochemical reaction is utilized to be able to selectively concentrate carbon dioxide.

### Brief Description of Drawings

[Fig. 1] A schematic view illustrating one example of carbon dioxide concentrator according to the present embodiment.
[Fig. 2] A graph showing a cyclic voltammogram with an oxidation-reduction resistance evaluation 1.

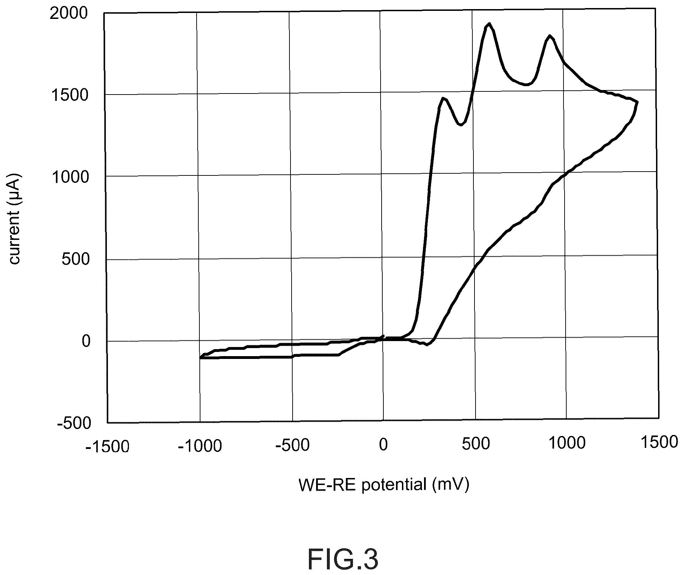

[Fig. 3] A graph showing a cyclic voltammogram with an oxidation-reduction resistance evaluation 2.

### Description of Embodiments

Hereinafter, the present invention will be described in detail. Note that "part(s)" and "%" described hereinafter are both based on mass, including Examples, etc., unless otherwise specified. To avoid complication, description of "compound or a salt thereof" may be simply referred to as "compound" for convenience.

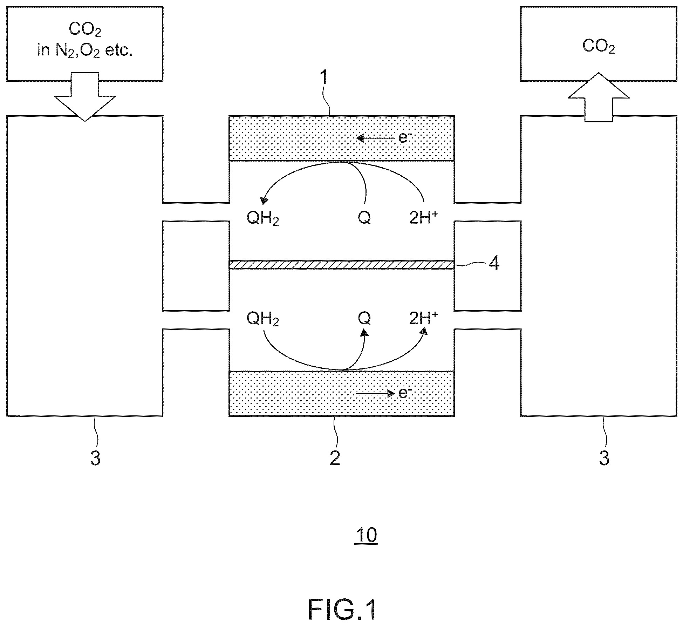

As illustrated in Fig. 1, a carbon dioxide concentrator 10 according to the present embodiment comprises: a first electrode 1 that is a cathode; a second electrode 2 that is separately disposed from the first electrode 1 and that is an anode; and at least one electrolyte liquid 3 that is contained between the first electrode 1 and the second electrode 2 and that is present in contact with the first electrode 1 and the second electrode 2. The at least one electrolyte liquid contains a fluoflavine compound, preferably a compound represented by a following formula (1), and this compound functions as a mediator.

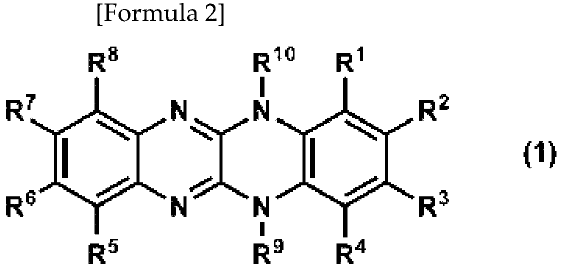

### [Compound represented by formula (1)]

In the compound represented by the formula (1), R¹ to R¹⁰ are each independently represented by a hydrogen atom, an alkyl group, a hydroxy group or a salt thereof, an alkoxy group, a nitro group, an amino group, a mercapto group, a cyano group, a halogen group, an aryl group, a sulfone group or a salt thereof, a carboxyl group or a salt thereof, a carbonyl group, a sulfonyl group, or a heteroaryl group.

Examples of the alkyl group include a methyl group, an ethyl group, a n-propyl group, an isopropyl group, a n-butyl group, and a t-butyl group.

Examples of the alkoxy group include a methoxy group, an ethoxy group, a n-propoxy group, an isopropoxy group, a n-butoxy group, and a t-butoxy group.

Examples of the amino group include an amino group (-NH₂), a methylamino group, a dimethylamino group, an ethylamino group, and a diethylamino group.

Examples of the halogen group include a fluorine group, a chlorine group, a bromine group, and an iodine group.

Examples of the aryl group include a phenyl group and a naphthyl group.

Examples of the carbonyl group include an acetyl group, a pivaloyl group, and a benzoyl group.

Examples of the sulfonyl group include a methanesulfonyl group, a p-toluenesulfonyl group, an o-nitrobenzenesulfonyl group, and a trifluoromethanesulfonyl group.

Examples of the heteroaryl group include a ring having a heteroatom as a ring constituent, such as a furyl group, a thienyl group, a pyrrolyl group, and a pyridyl group.

When the compound represented by the formula (1) has each of acidic groups such as the hydroxy group, the sulfone group, and the carboxyl group, each of these acidic groups may be a free acid or may form a salt.

When the acidic group such as the hydroxy group, the sulfone group, and the carboxyl group forms a salt, the salt may be, for example: an alkali metal salt such as a lithium salt, a sodium salt, and a potassium salt; an alkali earth metal salt such as a calcium salt; an ammonium salt such as an ammonium salt and a tetramethylammonium salt; etc. When the compound represented by the formula (1) has each of a plurality of the acidic groups, these may be all free acids, all salts, or partially free acids and partially salts. When a plurality of the salts are present as the acidic groups, these salts may be the same type of salt, or may be different types of salt.

In the compound represented by the formula (1), at least one of R¹ to R⁸ is preferably the sulfone group or a salt thereof, and at least two of R¹ to R⁸ are more preferably the sulfone groups or salts thereof. It is more preferable that at least one of R¹ to R⁸ be a group selected from the group consisting of the alkyl group, the alkoxy group, the halogen group, and the carboxyl group or a salt thereof, at least one of them may be the sulfone group or a salt thereof, at least one of R¹ to R⁸ be selected from the group consisting of the alkyl group, the alkoxy group, and the halogen group, and at least two of them be the sulfone groups or salts thereof. It is more preferable that at least one of them be selected from the group consisting of a methyl group, a methoxy group, and a chlorine group, and at least two of them be the sulfone groups or salts thereof. Among these embodiments, it is particularly preferable that two of R¹ to R⁸ be the sulfone group or a salt thereof.

When the sulfone group in R¹ to R⁸ is a salt, the salt of the sulfone group is preferably an ammonium salt or an alkali metal salt of the sulfone group, and particularly preferably an ammonium sulfonate group (-SO₃NH₄) or a sodium sulfonate group (-SO₃Na). When at least one of R¹ to R⁸ is the group selected from the group consisting of the alkyl group, the alkoxy group, the halogen group, and the carboxyl group or a salt thereof, R² is preferably the alkyl group, the alkoxy group, the halogen group, or the carboxyl group or a salt thereof, preferably the alkyl group, the alkoxy group, or the halogen group, further preferably a methyl group, a methoxy group, or a chlorine group, and particularly preferably a methyl group.

In the compound represented by the formula (1), at least one of R⁹ and R¹⁰ is preferably a hydrogen atom, and each of R⁹ and R¹⁰ is more preferably a hydrogen atom. When one of R⁹ and R¹⁰ is a hydrogen atom, the other is preferably the alkyl group, and more preferably a methyl group. At least one of R⁹ and R¹⁰ may be the alkyl group, and at least one of R¹ to R⁸ may be the sulfone group or a salt thereof. It is more preferable that at least one of R⁹ and R¹⁰ be a methyl group, and at least two of R¹ to R⁸ be the sulfone groups or salts thereof.

In the compound represented by the formula (1), examples of a preferable combination of R¹ to R¹⁰ include: a combination in which any two of R¹ to R⁸ are the sulfone groups and the others are hydrogen atoms, and each of R⁹ and R¹⁰ is a hydrogen atom; a combination in which any two of R¹ to R⁸ are salts of the sulfone groups and the others are hydrogen atoms, and each of R⁹ and R¹⁰ is a hydrogen atom; a combination in which R² is a methyl group, any two of R¹ and R³ to R⁸ are salts of the sulfone groups, and the others are hydrogen atoms, and each of R⁹ and R¹⁰ is a hydrogen atom; a combination in which R² is a methoxy group, any two of R¹ and R³ to R⁸ are salts of the sulfone groups, and the others are hydrogen atoms, and each of R⁹ and R¹⁰ is a hydrogen atom; a combination in which any two of R¹ to R⁸ are methyl groups, any two of them are salts of the sulfone groups, and the others are hydrogen atoms, and each of R⁹ and R¹⁰ is a hydrogen atom; a combination in which each of R² and R³ is a methyl group, any two of R³ to R⁸ are salts of the sulfone groups, the others are hydrogen atoms, and each of R⁹ and R¹⁰ is a hydrogen atom; a combination in which R² is a chlorine atom, any two of R¹ and R³ to R³ are salts of the sulfone groups, and the others are hydrogen atoms, and each of R⁹ and R¹⁰ is a hydrogen atom; a combination in which R² is the carboxyl group, any one of R¹ and R³ to R⁸ are salts of the sulfone groups, and the others are hydrogen atoms, and each of R⁹ and R¹⁰ is a hydrogen atom; and a combination in which any two of R¹ to R⁸ are ammonium sulfonate groups and the others are hydrogen atoms, and at least one of R⁹ and R¹⁰ is a methyl group and the other is a hydrogen atom.

Among these, the combination in which any two of R¹ to R⁸ are the sulfone groups and the others are hydrogen atoms, and each of R⁹ and R¹⁰ is a hydrogen atom; the combination in which any two of R¹ to R⁸ are salts of the sulfone groups and the others are hydrogen atoms, and each of R⁹ and R¹⁰ is a hydrogen atom; the combination in which R² is a methyl group, any two of R¹ and R³ to R⁸ are salts of the sulfone groups and the others are hydrogen atoms, and each of R⁹ and R¹⁰ is a hydrogen atom; the combination in which R² is a methoxy group, any two of R¹ and R³ to R³ are salts of the sulfone groups and the others are hydrogen atoms, and each of R⁹ and R¹⁰ is a hydrogen atom; the combination in which any two of R¹ to R⁸ are methyl groups, any two of them are salts of the sulfone groups, and the others are hydrogen atoms, and each of R⁹ and R¹⁰ is a hydrogen atom; the combination in which each of R¹ and R² is a methyl group, any two of R³ to R³ are salts of the sulfone groups, the others are hydrogen atoms, and each of R⁹ and R¹⁰ is a hydrogen atom; the combination in which R² is a chlorine atom, any two of R¹ and R³ to R⁸ are salts of the sulfone groups, and the others are hydrogen atoms, and each of R⁹ and R¹⁰ is a hydrogen atom; and the combination in which R² is the carboxyl group, any one of R¹ and R³ to R³ is a salt of the sulfone groups, and the others are hydrogen atoms, and each of R⁹ and R¹⁰ is a hydrogen atom are more preferable, and the combination in which any two of R¹ to R⁸ are ammonium sulfonate groups and the others are hydrogen atoms, and each of R⁹ and R¹⁰ is a hydrogen atom is extremely preferable.

The compound represented by the formula (1) may be used singly, or may be used in combination of two or more thereof. When two or more thereof are combined for use, these may be used in combination at any ratio.

The compound represented by the formula (1) may be an isomer such as a tautomer, a stereoisomer, and an enantiomer, and each of them may be any isomer or may be a mixture of different isomers.

A solubility of the compound represented by the formula (1) in water is preferably within a range of 0.1 mol/L or more and 5 mol/L or less. The lower limit value is more preferably 0.2 mol/L, and the upper limit is more preferably 3 mol/L. The solubility refers to a value (mol/L) when a compound exhibiting alkalinity, such as sodium hydrogen carbonate, is added into water containing the compound represented by the formula (1) to prepare a sample aqueous solution, and the compound represented by the formula (1) is dissolved therein at the maximum amount. Specifically, absorbance of the prepared sample aqueous solution is measured, and a value obtained by calculation from a calibration produced about the absorbance at the maximum absorption wavelength is described as the solubility.

### [Electrolyte liquid]

The carbon dioxide concentrator comprises an electrolyte liquid containing the compound represented by the formula (1) and water. Hereinafter, the electrolyte liquid containing the compound represented by the formula (1) and water may be simply abbreviated as "the electrolyte liquid".

A concentration of the compound represented by the formula (1) contained in the electrolyte liquid is not particularly limited, and preferably within a range of 0.1 mol/L or more and 5 mol/L or less. The lower limit value is more preferably 0.2 mol/L, and the upper limit value is more preferably 3 mol/L.

The electrolyte liquid further contains water as a solvent. For example, water such as ion-exchange water and Millipore water can be used, and Millipore water is preferable. A content of water in the electrolyte liquid may be freely set, and is preferably 1 mass% or more and 99 mass% or less, further preferably 5 mass% or more and 90 mass% or less, and particularly preferably 10 mass% or more and 80 mass% or less.

The electrolyte liquid may further contain a solute of an organic acid salt or an inorganic acid salt. Examples of such a solute include lithium carbonate, sodium carbonate, potassium carbonate, ammonium carbonate, sodium hydrogen carbonate, potassium hydrogen carbonate, ammonium chloride, ammonium sulfate, lithium acetate, sodium acetate, potassium acetate, ammonium acetate, lithium formate, sodium formate, potassium formate, ammonium formate, trilithium phosphate, lithium dihydrogen phosphate, trisodium phosphate, disodium hydrogen phosphate, sodium dihydrogen phosphate, tripotassium phosphate, dipotassium hydrogen phosphate, potassium dihydrogen phosphate, triammonium phosphate, diammonium hydrogen phosphate, ammonium dihydrogen phosphate, acetic acid, phosphoric acid, formic acid, glycine, alanine, valine, leucine, isoleucine, cerine, asparagine, glutamine, arginine, and lysine.

A pH of the electrolyte liquid is preferably 5 or more and 12 or less, more preferably 5 or more and 11 or less, further preferably 5 or more and 10 or less, and particularly preferably 5 or more and 9 or less.

Examples of a method for preparing the electrolyte liquid include a method of dissolving the compound represented by the formula (1) and a compound represented by the following formula (2) at the same mole amount as the compound represented by the formula (1) in water as the solvent. The compound represented by the formula (2) can be obtained by oxidizing the compound represented by the formula (1).

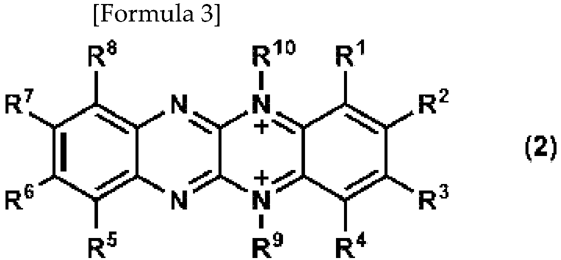

In the formula (2), R¹ to R¹⁰ are the same as R¹ to R¹⁰ defined in the formula (1), and preferable combinations of R¹ to R¹⁰ are also the same as of the compound represented by the formula (1). When one of or both R⁹ and R¹⁰ in the formula (2) are hydrogen atoms, a compound in which the hydrogen atoms dissociate is also included in the compound represented by the formula (2). When the compound represented by the formula (2) is contained in the electrolyte liquid, R¹ to R¹⁰ of the compound represented by the formula (1) and R¹ to R¹⁰ of the compound represented by the formula (2) may be the same as each other or different from each other, but preferably the same as each other.

Examples of a method of oxidizing the compound represented by the formula (1) include a method of electrochemical oxidation and a method of chemical oxidization. An example of the method of electrochemical oxidization includes a method in which an electrolyte liquid A prepared by dissolving the compound represented by the formula (1) in the solution containing water, etc. is used as a positive electrode electrolyte liquid, and an electrolyte liquid B containing a compound to be electrically reduced, described later, is used as a negative electrode electrolyte liquid to perform a charge reaction and obtain an electrolyte liquid C containing the compound represented by the formula (2). Note that the charge reaction means a reaction to obtain the electrolyte liquid C by connecting the electrolyte liquid A with a positive electrode of an external power source, connecting the electrolyte liquid B with a negative electrode of the same external power source, and flowing current.

The compound to be electrically reduced is not particularly limited as long as it functions as a negative electrode material, and examples thereof include a compound having an anthraquinone skeleton, a compound having a naphthoquinone skeleton, a compound having a benzoquinone skeleton, a compound having a phenazine skeleton, a compound having a viologen skeleton, vanadium, chromium, zinc, copper, and iron. A compound having an anthraquinone skeleton or a compound having a phenazine skeleton is preferable, and a compound having a phenazine skeleton is particularly preferable.

### [First electrode]

The first electrode is not particularly limited as long as it is an electrode having a function as a cathode, and preferably a porous conductor. Specific examples of the porous conductor include carbon felt, carbon sheet, carbon cloth, and carbon paper. A specific surface area of the porous conductor is preferably 1 m²/g or more, more preferably 30 m²/g or more, further preferably 100 m²/g or more, and particularly preferably 500 m²/g or more in BET adsorption measurement.

### [Second electrode]

The second electrode is not particularly limited as long as it is an electrode having a function as an anode, and preferably a porous conductor. Specific examples of the porous conductor include carbon felt, carbon sheet, carbon cloth, and carbon paper. A specific surface area of the porous conductor is preferably 1 m²/g or more, more preferably 30 m²/g or more, further preferably 100 m²/g or more, and particularly preferably 500 m²/g or more in BET adsorption measurement.

As the first electrode and the second electrode, the same type of material or porous conductor may be used, or different types of material or porous conductor may be used.

As illustrated in Fig. 1, in the carbon dioxide concentrator 10 according to the present embodiment, voltage is applied to the first electrode 1 and the second electrode 2 by using a direct-current power source. For example, when a compound QH₂ in which R⁹ and R¹⁰ are hydrogen atoms in the formula (1) is used as the mediator, the compound QH₂ is oxidized with the second electrode 2 by such voltage application and a compound Q is generated to release protons (H⁺) into the electrolyte liquid, and thus, pH of the electrolyte liquid 3 on the second electrode 2 side becomes relatively low compared with the pH before the reduction reaction. In addition, the reduction reaction of the compound Q occurs with the first electrode 1 by the voltage application to form the compound QH₂, and thus, the pH of the electrolyte liquid 3 on the first electrode 1 side becomes relatively high. When the pH of the electrolyte liquid 3 becomes relatively high, carbon dioxide introduced together with gas such as nitrogen gas and oxygen gas becomes more soluble in water as the solvent of the electrolyte liquid 3 due to its property, and hydrogen carbonate ions are released. The released hydrogen carbonate ions move to the second electrode 2 side with the relatively low pH, carbon dioxide and water are produced from the hydrogen carbonate ions and protons, and carbon dioxide is enriched. As above, carbon dioxide at a high concentration can be obtained on the second electrode side by utilizing the difference in the solubility of carbon dioxide with the pH, and the carbon dioxide concentrator that exhibits characteristics in which carbon dioxide can be selectively concentrated can be achieved.

The carbon dioxide concentrator 10 according to the present embodiment preferably further comprises a diaphragm 4 between the first electrode 1 and the second electrode 2, and two electrolyte liquids (3,3) may be used via the diaphragm 4. In such a case, the carbon dioxide concentrator 10 comprises: a first electrolyte liquid (not illustrated) that is contained between the first electrode 1 and the diaphragm 4 and that is present in contact with the first electrode 1; and a second electrolyte liquid (not illustrated) that is contained between the second electrode 2 and the diaphragm 4 and that is present in contact with the second electrode 2. The first electrolyte liquid and the second electrolyte liquid may be the same electrolyte liquid, or may be electrolyte liquids different from each other. When different electrolyte liquids are used for the first electrode 1 and the second electrode 2, examples thereof include a combination of the above electrolyte liquid A containing the compound represented by the formula (1) and the above electrolyte liquid B containing the compound to be electrically reduced as a counter electrolyte liquid.

Examples of the diaphragm include a cellulose porous membrane, a polyolefin porous membrane represented by polyethylene and polypropylene, porous membranes such as polyester, aliphatic polyamide, and aromatic polyamide, and nonwoven fabric, and a higher porosity of the diaphragm is preferable. The diaphragm may be any of an anion exchange membrane and a cation exchange membrane.

The carbon dioxide concentrator according to according to the present embodiment may further comprise an external power source, and the external power source is preferably a direct-current power source.

Based on the above embodiments, the present invention relates to the following [1] to [7].
[1] A carbon dioxide concentrator characterized by comprising:
   a first electrode that is a cathode;
   a second electrode that is separately disposed from the first electrode and that is an anode; and
   at least one electrolyte liquid that is contained between the first electrode and the second electrode and that is present in contact with the first electrode and the second electrode,
   wherein the at least one electrolyte liquid contains: a compound represented by a following formula (1) or a salt thereof; and water, 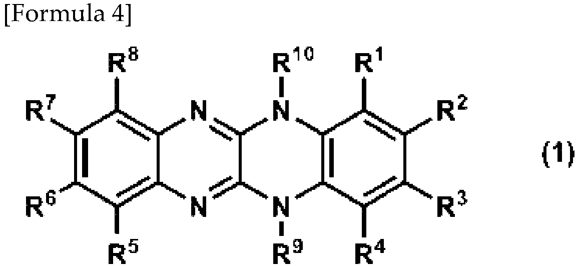
   in the formula (1), R¹ to R¹⁰ each independently represent a hydrogen atom, an alkyl group, a hydroxy group or a salt thereof, an alkoxy group, a nitro group, an amino group, a mercapto group, a cyano group, a halogen group, an aryl group, a sulfone group or a salt thereof, a carboxyl group or a salt thereof, a carbonyl group, a sulfonyl group, or a heteroaryl group.
[2] The carbon dioxide concentrator according to [1], wherein, in the formula (1), at least one of R¹ to R⁸ represents a sulfone group or a salt thereof.
[3] The carbon dioxide concentrator according to [1], wherein, in the formula (1), at least two of R¹ to R⁸ represent a sulfone group or a salt thereof.
[4] The carbon dioxide concentrator according to [2], wherein, in the formula (1), at least one of R¹ to R⁸ represents a group selected from a group consisting of an alkyl group, an alkoxy group, a halogen group, and a carboxyl group or a salt thereof.
[5] The carbon dioxide concentrator according to any one of [1] to [4], further comprising a diaphragm between the first electrode and the second electrode.
[6] The carbon dioxide concentrator according to [5], comprising: a first electrolyte liquid that is contained between the first electrode and the diaphragm and that is present in contact with the first electrode; and a second electrolyte liquid that is contained between the second electrode and the diaphragm and that is present in contact with the second electrode, wherein the first electrolyte liquid contains: the compound represented by the formula (1) or a salt thereof; and water.
[7] The carbon dioxide concentrator according to [6], wherein the first electrolyte liquid and the second electrolyte liquid are electrolyte liquids different from each other.

### Examples

Hereinafter, the present invention will be described in more detail with Examples, but the present invention is not limited by these Examples. Unless otherwise specified, room temperature is within a range of 20°C±5°C.

### [Synthesis Example 1]

Into 500 parts of dimethylformamide (DMF), 25.2 parts of 2,3-dichloroquinoxaline and 13.7 parts of o-phenylenediamine were dissolved, and the mixture was heated to 120°C. The solution obtained by holding the temperature at 120°C was stirred for 3 hours, then left to cool to room temperature, and the precipitate was separated by filtration under a reduced pressure to obtain 50 parts of a wet cake. Into this wet cake, 200 parts of acetone was added, the mixture was stirred for 30 minutes, the precipitate was separated by filtration under a reduced pressure, and the obtained wet cake was dried at 80°C for one day to obtain 23.4 parts of a fluoflavine compound represented by the following formula (1-1).

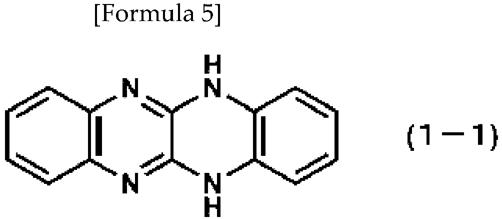

### [Synthesis Example 2]

Into 30 parts of 15% fuming sulfuric acid cooled to 5°C, 2.5 parts of the fluoflavine compound represented by the formula (1-1) obtained in the Synthesis Example 1 was added, and then the mixture was stirred at 25°C for 5 hours. After the reaction was finished, the reaction liquid was dropped into 100 parts of iced water, the mixture was stirred at 25°C for 30 minutes, and then the precipitate was separated by filtration under a reduced pressure to obtain 10 parts of a wet cake. Into this wet cake, 20 parts of water was added, the mixture was stirred for 60 minutes, and the precipitate was separated by filtration under a reduced pressure. Into the obtained precipitate, 40 parts of water was added, and aqueous ammonia was dropped while stirring to adjust pH to 8.0 to 9.0, then the solvent was evaporated, and the product was dried at 80°C for one day to obtain 3.8 parts of a fluoflavine compound represented by the following formula (1-2).

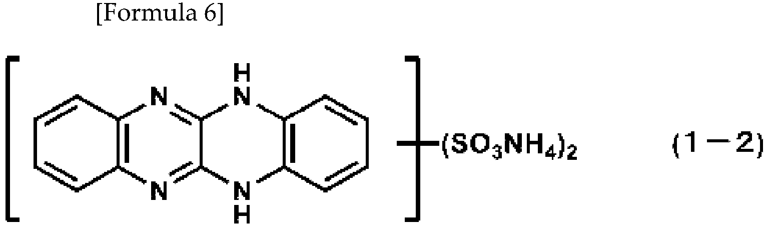

### [Synthesis Example 3]

While 17.6 parts of 1,2-phenylenediamine and 25 parts of 2,5-dihydroxy-1,4-benzoquinone were stirred in 3000 parts of water, the mixture was heated with circular current for 5 hours and 30 minutes, and then the mixture was cooled to room temperature and further stirred overnight. From the obtained suspension, a black wet cake was obtained by filtration separation, and further washed with water. This wet cake was dried under a reduced pressure at 80°C to obtain 103.2 parts of a wet cake containing 0.163 mol of a compound represented by the following formula (1-3).

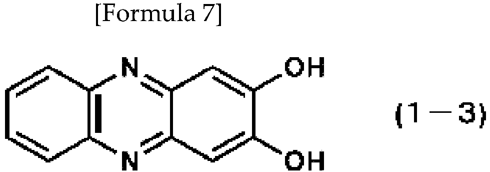

### [Synthesis Example 4]

Into 410 parts of dimethylformamide, 51.2 parts of the wet cake obtained in the Synthesis Example 3 and 36.6 parts of 1,8-diazabicyclo[5,4,0]undec-7-ene were dissolved, 30.2 parts of 1,3-propanesultone was added thereinto, and then the temperature was raised to 120°C and the mixture was stirred for 3 hours. Thereafter, the mixture was cooled to room temperature, 24.7 parts of a 28% aqueous ammonia was added into the obtained solution, and the mixture was stirred for 30 minutes. The obtained reaction liquid was poured into 3.0 L of acetone, and the precipitated solid was separated by filtration to obtain a wet cake. This wet cake was dissolved into 70 parts of water, then 10 parts of a 25% aqueous solution of sodium hydroxide was added, then the mixture was poured into 1.5 L of ethanol, and the precipitated solid was separated by filtration to obtain a red wet cake. This wet cake was dried at 80°C under a reduced pressure to obtain 34.8 parts of a compound represented by the following formula (1-4).

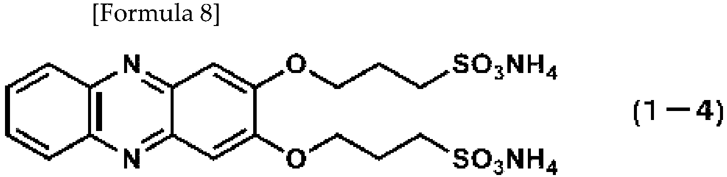

### [Example 1]

The fluoflavine compound represented by the formula (1-2) was dissolved into an aqueous solution (1.0 mmol/L) of ammonium hydrogen carbonate (manufactured by KANTO CHEMICAL CO., INC., Cica special grade) so that the concentration was 0.1 mol/L to prepare an electrolyte liquid 1. The compound represented by the formula (1-4) was dissolved into the above aqueous solution of ammonium hydrogen carbonate so that the concentration was 0.1 (mol/L) to prepare an electrolyte liquid 2. An ion exchange membrane (manufactured by Sigma-Aldrich Japan, Nafion(R) NRE-212) was used as a diaphragm, and carbon felt (manufactured by TOYOBO Co., Ltd., AAF304ZS, 10 mm × 50 mm × 4 mm) was used as an electrode. The carbon felt was injected into a hole with 50 mm × 10 mm made at a center part of a gasket made of silicone (80 mm × 30 mm × 3 mm), and these members were combined so that the order was the current-collecting plate/the electrode/the diaphragm/the electrode/the current-collecting plate. As an electrolyte liquid, each of 10 ml of the prepared electrolyte liquid 1 and electrolyte liquid 2 was poured into each vial, and the inside of the cell was filled with the electrolyte liquids with a peristaltic pump while separated with the diaphragm. The electrolyte liquid 1 was oxidized with a multi-electrochemical measurement system (manufactured by Hokuto Denko Co., Ltd., HZ-Pro) with a constant current of 100 mA until an upper limit voltage of 1.3 V to prepare an electrolyte liquid 3. The prepared electrolyte liquid 3 and the electrolyte liquid 1 at the same amount were mixed to prepare an electrolyte liquid 4. A pH of the electrolyte liquid 4 was measured with a desktop pH meter (manufactured by HORIBA, Ltd., F-73), and found that the pH was 8.14.

A cellulose porous membrane (manufactured by Repligen Corporation, Spectra/Por^{™}6, MWCO = 1 KD) was used as the diaphragm, carbon felt (manufactured by TOYOBO Co., Ltd., AAF304ZS, 10 mm × 50 mm × 4 mm) was used as the first and second electrodes, respectively. The carbon felt was injected into a hole with 50 mm × 10 mm made at a center part of a gasket made of silicone (80 mm × 30 mm × 3 mm), and these members were combined so that the order was the current-collecting plate/the first electrode/the diaphragm/the second electrode/the current-collecting plate. As an electrolyte liquid, 10 ml of the prepared electrolyte liquid 4 was poured into each vial, and the inside of the cell was filled with the electrolyte liquid with a peristaltic pump while separated with the diaphragm. Current was flown with a multi-electrochemical measurement system (manufactured by Hokuto Denko Co., Ltd., HZ-Pro) with a constant current of 100 mA until an upper limit voltage of 0.5 V. The pH of the electrolyte liquid on the anode (the second electrode) side after the reaction was 7.86, and the pH of the electrolyte liquid on the cathode (the first electrode) side was 8.41.

**[Table 1]**

| Example | pH before reaction | pH after reaction (anode) | pH after reaction (cathode) |
|---|---|---|---|
| 1 | 8.14 | 7.86 | 8.41 |

As shown in the Table 1, it is understood that the carbon dioxide concentrator produced in Example 1 has the characteristics in which a gradient of pH is generated between the anode and cathode by flowing current, and carbon dioxide can be selectively concentrated.

### [Synthesis Example 5]

Into 405 parts of 1-butanol, 101 parts of 2,3-dichloroquinoxaline and 62.0 parts of 3,4-diaminotoluene were dissolved, and the mixture was heated to 114°C. The mixture was stirred for 5 hours while holding the temperature at 114°C, then left to cool to room temperature, 542 parts of a 8% aqueous solution of sodium hydrogen carbonate was added into the obtained solution, and the mixture was stirred for 1 hour. The precipitate was separated by filtration under a reduced pressure, and washed with 240 parts of methanol to obtain 243 parts of a wet cake. Into this wet cake, 317 parts of methanol was added, and the mixture was stirred for 1 hour. The precipitate was separated by filtration under a reduced pressure, and washed with 240 parts of methanol. Into the obtained wet cake, 300 parts of water was added, and the mixture was stirred for 1 hour. The precipitate was separated by filtration under a reduced pressure, and washed with 300 parts of water to obtain 295 parts of a wet cake. The obtained wet cake was dried at 80°C for 15 hours to obtain 88.0 parts of a fluoflavine compound represented by the following formula (1-5).

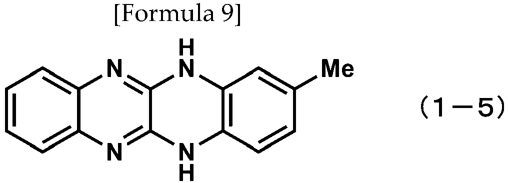

### [Synthesis Example 6]

Into 150 parts of 15% fuming sulfuric acid cooled to 5°C, 15.0 parts of the fluoflavine compound represented by the formula (1-5) obtained in the Synthesis Example 5 was added, and then the mixture was stirred at 25°C for 15 hours. After the reaction was finished, the reaction liquid was dropped into 360 parts of iced water, the mixture was stirred at 25°C for 30 minutes, and then the precipitate was separated by filtration under a reduced pressure to obtain 123 parts of a wet cake. Into this wet cake, 125 parts of water was added, the mixture was stirred for 1 hour, and the precipitate was separated by filtration under a reduced pressure. Into 108 parts of the obtained wet cake, 110 parts of water was added, the mixture was stirred for 60 minutes, and the precipitate was separated by filtration under a reduced pressure. Into the obtained precipitate, 150 parts of water was added, and sodium hydroxide was added while stirring to adjust the pH to 6.5 to 7.5, then 0.81 parts of Carborafin was added, and the mixture was stirred at 50°C for 1 hour. This dispersion was left to cool to room temperature, then filtered with Radiolite, and the solvent in the obtained filtrate was evaporated to obtain 22.3 parts of a yellow solid. This yellow solid was dissolved into 220 parts of water, the solution was dropped into 1100 parts of 2-propanol, and the precipitate was separated by filtration under a reduced pressure. The obtained wet cake was dried under a reduced pressure for one day while heating at 80°C to obtain 18.5 parts of a fluoflavine compound represented by the following formula (1-6).

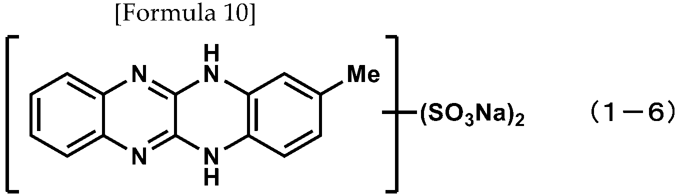

### [Synthesis Example 7]

Into 40.5 parts of 1-butanol, 10.0 parts of 2,3-dichloroquinoxaline and 6.84 parts of 4,5-dimethylphenylene-1,2-diamine were dissolved, and the mixture was heated to 114°C. The solution obtained by holding the temperature at 114°C was stirred for 7 hours, then left to cool to room temperature, the precipitate was separated by filtration under a reduced pressure, and washed with 105 parts of methanol to obtain 15 parts of a wet cake. Into this wet cake, 35 parts of methanol was added, and the mixture was stirred for 1 hour. The precipitate was separated by filtration under a reduced pressure, and washed with 35 parts of methanol. Into the obtained wet cake, 105 parts of water was added, the mixture was stirred, 15 parts of a 25% aqueous solution of sodium hydroxide was added, and the mixture was stirred for 1 hour. The precipitate was separated by filtration under a reduced pressure, and washed with 105 parts of water to obtain 15 parts of a wet cake. Into the obtained wet cake, 35 parts of water was added, the mixture was stirred for 1 hour, and the precipitate was separated by filtration under a reduced pressure. Into the obtained wet cake, 70 parts of a 25% aqueous solution of sodium hydroxide was added, the mixture was stirred for 1 hour, and the precipitate was separated by filtration under a reduced pressure. The obtained wet cake was dried at 80°C for 15 hours to obtain 6.51 parts of a fluoflavine compound represented by the following formula (1-7).

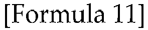

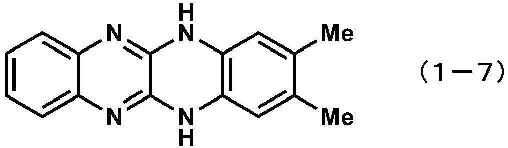

### [Synthesis Example 8]

Into 40 parts of 15% fuming sulfuric acid cooled to 5°C, 4.00 parts of the fluoflavine compound represented by the formula (1-7) obtained in the Synthesis Example 7 was added, and then the mixture was stirred at 25°C for 66 hours. The mixture was further stirred at 60°C for 8 hours, then left to cool to 25°C, 40 parts of 15% fuming sulfuric acid was added into the obtained solution, and the mixture was stirred for 6 hours. After the reaction was finished, the reaction liquid was dropped into 125 parts of iced water, the mixture was stirred at 25°C for 30 minutes, and then the precipitate was separated by filtration under a reduced pressure to obtain 60 parts of a wet cake. Into this wet cake, 60 parts of water was added, the mixture was stirred for 1 hour, and the precipitate was separated by filtration under a reduced pressure. Into 41 parts of the obtained wet cake, 80 parts of water was added, a 25% aqueous solution of sodium hydroxide was added while stirring to adjust the pH to 6.5 to 7.5, then 0.21 parts of Carborafin was added, and the mixture was stirred at 50°C for 1 hour. This dispersion was left to cool to room temperature, then filtered with Radiolite, and the solvent in the obtained filtrate was evaporated to obtain 7.92 parts of a yellow solid. This yellow solid was dissolved into 80 parts of water, the solution was dropped into 400 parts of 2-propanol, and the precipitate was separated by filtration under a reduced pressure. The obtained wet cake was dried under a reduced pressure for one day while heating at 80°C to obtain 6.07 parts of a fluoflavine compound represented by the following formula (1-8).

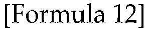

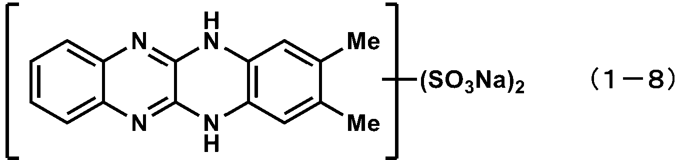

### [Synthesis Example 9]

Into 40.5 parts of 1-butanol, 10.0 parts of 2,3-dichloroquinoxaline and 7.64 parts of 3,4-diaminobenzoic acid were dissolved, and the mixture was heated to 114°C. The obtained solution was stirred for 24 hours while holding the temperature at 114°C, then left to cool to room temperature, the precipitate was separated by filtration under a reduced pressure, and washed with 105 parts of methanol to obtain 20 parts of a wet cake. Into this wet cake, 35 parts of methanol was added, and the mixture was stirred for 1 hour. The precipitate was separated by filtration under a reduced pressure, and washed with 35 parts of methanol. Into the obtained wet cake, 105 parts of water was added, the mixture was stirred, 17.4 parts of a 1-M aqueous solution of sodium hydroxide was added, and the mixture was stirred for 1 hour. The precipitate was separated by filtration under a reduced pressure, and washed with 180 parts of water. Into the obtained wet cake, 60 parts of water was added, the mixture was stirred for 1 hour, and the precipitate was separated by filtration under a reduced pressure. The obtained wet cake was dried at 80°C for 15 hours to obtain 9.19 parts of a fluoflavine compound represented by the following formula (1-9).

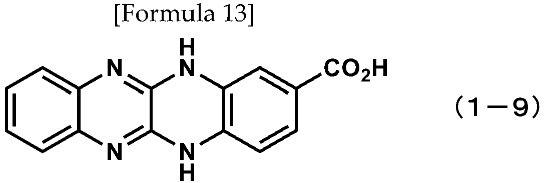

### [Synthesis Example 10]

Into 50 parts of 15% fuming sulfuric acid cooled to 5°C, 5.00 parts of the fluoflavine compound represented by the formula (1-9) obtained in the Synthesis Example 9 was added, and then the mixture was stirred at 25°C for 5 hours. After the reaction was finished, the reaction liquid was dropped into 121 parts of iced water, the mixture was stirred at 25°C for 30 minutes, and then the precipitate was separated by filtration under a reduced pressure to obtain 27.5 parts of a wet cake. Into this wet cake, 30 parts of water was added, the mixture was stirred for 1 hour, and the precipitate was separated by filtration under a reduced pressure. Into the obtained wet cake, 25 parts of water was added, the mixture was stirred for 1 hour, and the precipitate was separated by filtration under a reduced pressure. Into 18.6 parts of the obtained wet cake, 53 parts of water was added, a 25% aqueous solution of sodium hydroxide was added while stirring to adjust the pH to 6.5 to 7.5, then 0.33 parts of Carborafin was added, and the mixture was stirred at 50°C for 1 hour. This dispersion was left to cool to room temperature, then filtered with Radiolite, the obtained filtrate was dropped into 1100 parts of 2-propanol, and the precipitate was separated by filtration under a reduced pressure. The obtained wet cake was dried under a reduced pressure for one day while heating at 80°C to obtain 2.60 parts of a fluoflavine compound represented by the following formula (1-10).

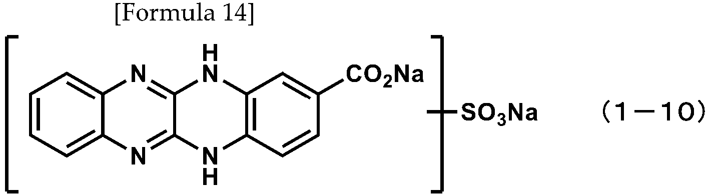

### [Synthesis Example 11]

Into 40.5 parts of 1-butanol, 10.0 parts of 2,3-dichloroquinoxaline and 7.16 parts of 4-chlorophenylene-1,2-diamine were dissolved, and the mixture was heated to 114°C. The obtained solution was stirred for 7 hours while holding the temperature at 114°C, then left to cool to room temperature, the precipitate was separated by filtration under a reduced pressure, and washed with 105 parts of methanol to obtain a wet cake. Into this wet cake, 35 parts of methanol was added, and the mixture was stirred for 1 hour. The precipitate was separated by filtration under a reduced pressure, and washed with 35 parts of methanol. Into the obtained wet cake, 105 parts of water was added, the mixture was stirred, 15 parts of a 25% aqueous solution of sodium hydroxide was added, and the mixture was stirred for 1 hour. The precipitate was separated by filtration under a reduced pressure, and washed with 105 parts of water to obtain a wet cake. Into the obtained wet cake, 35 parts of water was added, the mixture was stirred for 1 hour, and the precipitate was separated by filtration under a reduced pressure. The obtained wet cake was dried at 80°C for 15 hours to obtain 10.3 parts of a fluoflavine compound represented by the following formula (1-11).

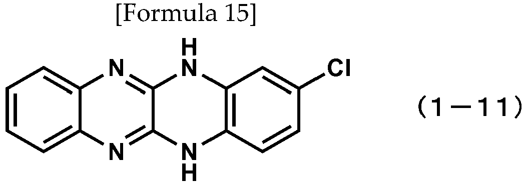

### [Synthesis Example 12]

Into 80 parts of 15% fuming sulfuric acid cooled to 5°C, 8.00 parts of the fluoflavine compound represented by the formula (1-11) obtained in the Synthesis Example 11 was added, and then the mixture was stirred at 25°C for 20 hours. The obtained solution was further stirred at 90°C for 6 hours, the reaction liquid was left to cool to 25°C, and dropped into 193 parts of iced water. The mixture was stirred at 25°C for 30 minutes, and then the precipitate was separated by filtration under a reduced pressure to obtain 56.0 parts of a wet cake. Into this wet cake, 60 parts of water was added, the mixture was stirred for 1 hour, and the precipitate was separated by filtration under a reduced pressure. Into the obtained wet cake, 45 parts of water was added, the mixture was stirred for 1 hour, and the precipitate was separated by filtration under a reduced pressure. Into 32.4 parts of the obtained wet cake, 113 parts of water was added, a 25% aqueous solution of sodium hydroxide was added while stirring to adjust the pH to 6.5 to 7.5, then 0.81 parts of Carborafin was added, and the mixture was stirred at 50°C for 1 hour. This dispersion was left to cool to room temperature, then filtered with Radiolite, the obtained filtrate was dropped into 600 parts of 2-propanol, and the precipitate was separated by filtration under a reduced pressure. The obtained wet cake was dried under a reduced pressure for one day while heating at 80°C to obtain 9.97 parts of a fluoflavine compound represented by the following formula (1-12).

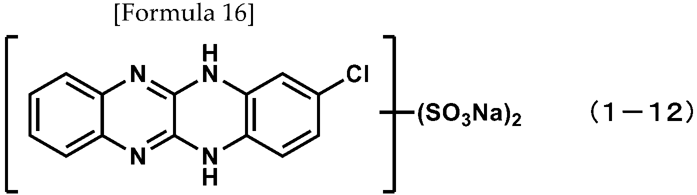

### [Synthesis Example 13]

Into 40.5 parts of 1-butanol, 10.0 parts of 2,3-dichloroquinoxaline and 6.94 parts of 4-chlorophenylene-1,2-diamine were dissolved, and the mixture was heated to 114°C. The obtained solution was stirred for 24 hours while holding the temperature at 114°C, then left to cool to room temperature, a 25% aqueous solution of sodium hydroxide was added into the obtained solution to adjust the pH to 6.5 to 7.5, and then the mixture was stirred for 1 hour. The precipitate was separated by filtration under a reduced pressure, and washed with 105 parts of methanol to obtain 22 parts of a wet cake. Into this wet cake, 35 parts of methanol was added, and the mixture was stirred for 1 hour. The precipitate was separated by filtration under a reduced pressure, and washed with 105 parts of methanol. Into the obtained wet cake, 35 parts of water was added, and the mixture was stirred for 1 hour. The precipitate was separated by filtration under a reduced pressure, and washed with 35 parts of water to obtain 26.8 parts of a wet cake. The obtained wet cake was dried at 80°C for 15 hours to obtain 10.4 parts of a fluoflavine compound represented by the following formula (1-13).

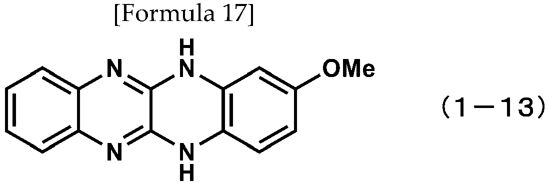

### [Synthesis Example 14]

Into 80 parts of 15% fuming sulfuric acid cooled to 5°C, 8.00 parts of the fluoflavine compound represented by the formula (1-13) obtained in the Synthesis Example 13 was added, and then the mixture was stirred at 25°C for 5 hours. The reaction liquid was dropped into 193 parts of iced water, the mixture was stirred at 25°C for 30 minutes, and then the precipitate was separated by filtration under a reduced pressure to obtain 28.8 parts of a wet cake. Into this wet cake, 30 parts of water was added, the mixture was stirred for 1 hour, and the precipitate was separated by filtration under a reduced pressure. Into the obtained wet cake, 25 parts of water was added, the mixture was stirred for 1 hour, and the precipitate was separated by filtration under a reduced pressure. Into 21.5 parts of the obtained wet cake, 108 parts of water was added, a 25% aqueous solution of sodium hydroxide was added while stirring to adjust the pH to 6.5 to 7.5, then 0.41 parts of Carborafin was added, and the mixture was stirred at 50°C for 1 hour. This dispersion was left to cool to room temperature, then filtered with Radiolite, the obtained filtrate was dropped into 540 parts of 2-propanol, and the precipitate was separated by filtration under a reduced pressure. The obtained wet cake was dried under a reduced pressure for one day while heating at 80°C to obtain 8.73 parts of a fluoflavine compound represented by the following formula (1-14).

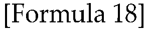

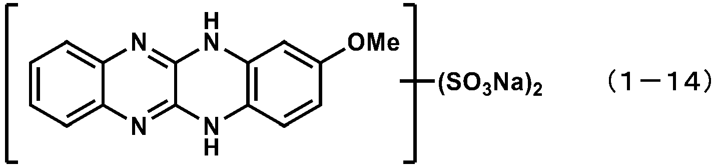

### [Synthesis Example 15]

Into 60 parts of sulfuric acid, 20 parts of gallic acid was added, the mixture was stirred, and stirred at 105°C for 3 hours. The reaction liquid was cooled to 50°C, poured into 150 parts of iced water, and the obtained suspension was stirred for 1 hour. After the stirring, the suspension was separated by filtration to obtain a wet cake. This wet cake was added into 150 parts of cooled water, the mixture was stirred for 30 minutes, and then the suspension was separated by filtration to obtain a wet cake. This wet cake was added in portions into 150 parts of a 5% aqueous solution of sodium hydrogen carbonate, the mixture was stirred for 1 hour, and then the suspension was separated by filtration to obtain a wet cake. This wet cake was dried with a hot-air dryer at 80°C to obtain 12.4 parts of a compound represented by the following formula (1-15).

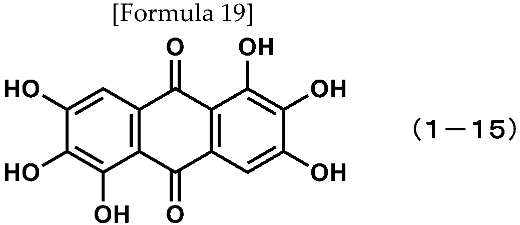

### [Synthesis Example 16]

Into 45 parts of water, 15 parts of the compound represented by the formula (1-15) was added, the mixture was stirred, a pH of the solution was adjusted to 9.5 to 10.0 with a 25% aqueous solution of sodium hydroxide, and the temperature was raised to 60°C. Into the obtained solution, 20 parts of propanesultone was added dropwise over 2 hours, and after the dropwise addition, the mixture was stirred at 60°C for 4 hours. During this time, the pH of the solution was maintained within a pH of 10.0 to 10.5 with a 25% aqueous solution of sodium hydroxide. Into the obtained reaction liquid, 500 parts of methanol was added, and the mixture was stirred at 20 to 25°C for 2 hours. After the stirring, the precipitated solid was separated by filtration to obtain 40.8 parts of a wet cake. This wet cake was dried with a hot-air dryer at 80°C to obtain 9.2 parts of a compound represented by the following formula (1-16).

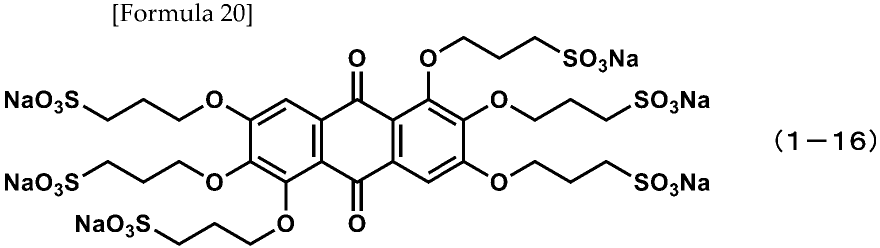

### [Example 2]

An electrolyte liquid 5 was prepared in the same manner as of the electrolyte liquid 4 in Example 1 except that: the fluoflavine compound represented by the formula (1-2) in Example 1 was changed to the fluoflavine compound represented by the formula (1-6); the compound represented by the formula (1-4) was changed to the compound represented by the formula (1-16); and ammonium hydrogen carbonate was changed to sodium hydrogen carbonate. An electrochemical cell similar to that in Example 1 was produced, and current was flown in the same manner as in Example 1. The pH of the electrolyte liquid before the reaction was 9.161, the pH of the electrolyte liquid on the anode side after the reaction was 8.699, and the pH of the electrolyte liquid on the cathode side was 9.456.

### [Example 3]

An electrolyte liquid 6 was prepared in the same manner as of the electrolyte liquid 5 in Example 2 except that the fluoflavine compound represented by the formula (1-6) in Example 2 was changed to the fluoflavine compound represented by the formula (1-8). An electrochemical cell similar to that in Example 1 was produced, and current was flown in the same manner as in Example 1. The pH of the electrolyte liquid before the reaction was 8.967, the pH of the electrolyte liquid on the anode side after the reaction was 8.782, and the pH of the electrolyte liquid on the cathode side was 9.124.

### [Example 4]

An electrolyte liquid 7 was prepared in the same manner as of the electrolyte liquid 5 in Example 2 except that: the fluoflavine compound represented by the formula (1-6) in Example 2 was changed to the fluoflavine compound represented by the formula (1-10); and the concentration thereof was changed to 0.01 M. An electrochemical cell similar to that in Example 1 was produced, and current was flown in the same manner as in Example 1. The pH of the electrolyte liquid before the reaction was 8.596, the pH of the electrolyte liquid on the anode side after the reaction was 8.555, and the pH of the electrolyte liquid on the cathode side was 8.632.

### [Example 5]

An electrolyte liquid 8 was prepared in the same manner as of the electrolyte liquid 5 in Example 2 except that: the fluoflavine compound represented by the formula (1-6) in Example 2 was changed to the fluoflavine compound represented by the formula (1-12); the concentration thereof was changed to 0.01 M; and the concentration of sodium hydrogen carbonate was changed to 0.5 M. An electrochemical cell similar to that in Example 1 was produced, and current was flown in the same manner as in Example 1. The pH of the electrolyte liquid before the reaction was 8.856, the pH of the electrolyte liquid on the anode side after the reaction was 8.794, and the pH of the electrolyte liquid on the cathode side was 8.935.

### [Example 6]

An electrolyte liquid 9 was prepared in the same manner as of the electrolyte liquid 5 in Example 2 except that: the fluoflavine compound represented by the formula (1-6) in Example 2 was changed to the fluoflavine compound represented by the formula (1-14); the concentration thereof was changed to 0.05 M; and the concentration of sodium hydrogen carbonate was changed to 0.5 M. An electrochemical cell similar to that in Example 1 was produced, and current was flown in the same manner as in Example 1. The pH of the electrolyte liquid before the reaction was 8.358, the pH of the electrolyte liquid on the anode side after the reaction was 7.674, and the pH of the electrolyte liquid on the cathode side was 8.882.

Table 2 shows the results of Examples 2 to 6.

**[Table 2]**

| Example | pH before reaction | pH after reaction (anode) | pH after reaction (cathode) |
|---|---|---|---|
| 2 | 9.161 | 8.699 | 9.456 |
| 3 | 8.967 | 8.782 | 9.124 |
| 4 | 8.596 | 8.555 | 8.632 |
| 5 | 8.856 | 8.794 | 8.935 |
| 6 | 8.358 | 7.674 | 8.882 |

As shown in Table 2, it is understood that the carbon dioxide concentrators produced in Examples 2 to 6 have the characteristics in which a gradient of pH is generated between the anode and cathode by flowing current, and carbon dioxide can be selectively concentrated.

### [Oxidation-reduction resistance evaluation 1]

The fluoflavine compound represented by the formula (1-2) was dissolved in an aqueous solution (1.0 mol/L) of sodium hydrogen carbonate (manufactured by Tosoh Corporation, an industrial product) so that the concentration was 0.1 mol/L to produce an electrolyte liquid 10. The electrolyte liquid 10 was added into a sample vial for voltammetry (manufactured by BAS Inc., No. 001056), and a Teflon^{™} cap for voltammetry (manufactured by BAS Inc., 012671) was attached. A Pt counter electrode (manufactured by BAS Inc., No. 002222), a GCE glass-like carbon electrode (manufactured by BAS Inc., 6.0 × 3.0 mm, No. 002012), and a saturated KCl/silver/silver chloride reference electrode (manufactured by BAS Inc., No. 013503) were fixed with the Teflon^{™} cap so as to be immersed in the electrolyte liquid 10, and measurement of cyclic voltammetry was performed with a multi-electrochemical measurement system (manufactured by Hokuto Denko Co., Ltd., HZ-Pro). The potential scanning range was set to -500 mV to 700 mV, and a sweep rate was set to 100 mV/sec to perform the measurement. Fig. 1 shows a cyclic voltammogram of the first cycle of the electrolyte liquid 10. As shown in Fig. 1, symmetric oxidation wave and reduction wave are observed, and it is understood that electrochemically stable oxidation and reduction occur.

### [Comparative Example 1]

An electrolyte liquid 11 was prepared in the same manner as of the electrolyte liquid 5 in Example 2 except that the fluoflavine compound represented by the formula (1-6) in Example 2 was changed to the compound represented by the formula (1-17). An electrochemical cell similar to that in Example 1 was produced, and current was flown in the same manner as in Example 1. The pH of the electrolyte liquid before the reaction was 7.690, the pH of the electrolyte liquid on the anode side after the reaction was 7.519, and the pH of the electrolyte liquid on the cathode side was 8.207.

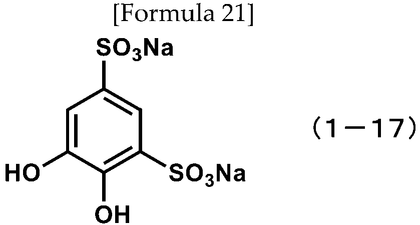

### [Oxidation-reduction resistance evaluation 2]

An electrolyte liquid 12 was prepared in the same manner except that the fluoflavine compound represented by the formula (1-2) in the oxidation-reduction resistance evaluation 1 was changed to the compound represented by the formula (1-17).

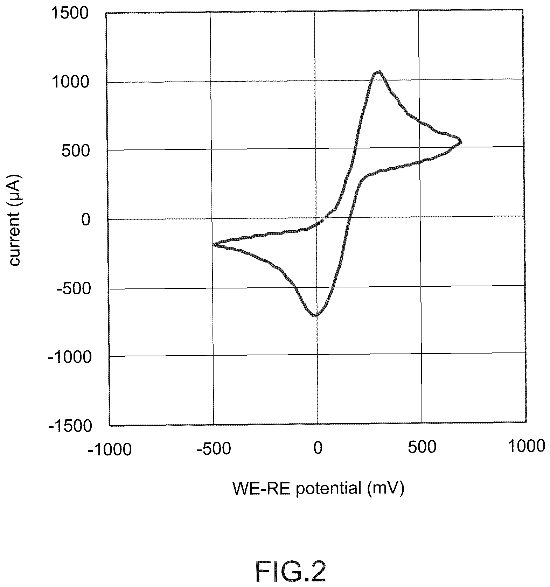

Measurement of cyclic voltammetry was performed in the same manner as in the oxidation-reduction resistance evaluation 1 except that: the electrolyte liquid 10 was changed to the electrolyte liquid 12; and the potential scanning range was changed to -1000 mV to 1400 mV. Fig. 2 shows a cyclic voltammogram of the first cycle of the electrolyte liquid 12. As shown in Fig. 2, a plurality of oxidation waves are observed but almost no reduction wave was observed, and it is presumed that the compound represented by the following formula (1-17) was oxidized and then decomposed.

From the above results, it is understood that the fluoflavine compound represented by the formula (1-2) has not only the characteristics in which carbon dioxide can be selectively concentrated but also has high stability relative to the oxidation-reduction reaction, and as a result, the carbon dioxide concentrator using the electrolyte liquid containing the compound represented by the formula (1) has excellent stability.

### Industrial Applicability

The carbon dioxide concentrator according to the present invention can provide the carbon dioxide separation-recovery characteristics from the atmosphere and exhaust gas of factories.

### List of Reference Signs

- 1: first electrode (cathode)
- 2: second electrode (anode)
- 3: electrolyte liquid
- 4: diaphragm
- 10: carbon dioxide concentrator

## Claims

1. A carbon dioxide concentrator **characterized by** comprising:
a first electrode that is a cathode;
a second electrode that is separately disposed from the first electrode and that is an anode; and
at least one electrolyte liquid that is contained between the first electrode and the second electrode and that is present in contact with the first electrode and the second electrode,
wherein the at least one electrolyte liquid contains: a compound represented by a following formula (1) or a salt thereof; and water, 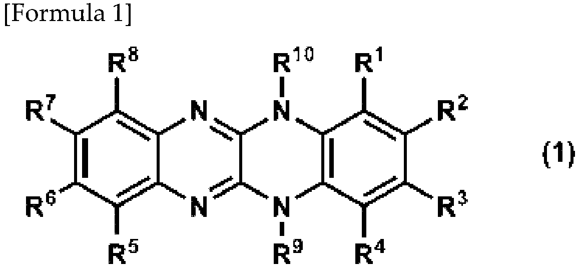
in the formula (1), R¹ to R¹⁰ each independently represent a hydrogen atom, an alkyl group, a hydroxy group or a salt thereof, an alkoxy group, a nitro group, an amino group, a mercapto group, a cyano group, a halogen group, an aryl group, a sulfone group or a salt thereof, a carboxyl group or a salt thereof, a carbonyl group, a sulfonyl group, or a heteroaryl group.

2. The carbon dioxide concentrator according to claim 1, wherein, in the formula (1), at least one of R¹ to R⁸ represents a sulfone group or a salt thereof.

3. The carbon dioxide concentrator according to claim 1, wherein, in the formula (1), at least two of R¹ to R⁸ represent a sulfone group or a salt thereof.

4. The carbon dioxide concentrator according to claim 2, wherein, in the formula (1), at least one of R¹ to R⁸ represents a group selected from a group consisting of an alkyl group, an alkoxy group, a halogen group, and a carboxyl group or a salt thereof.

5. The carbon dioxide concentrator according to any one of claims 1 to 4, further comprising a diaphragm between the first electrode and the second electrode.

6. The carbon dioxide concentrator according to claim 5, comprising: a first electrolyte liquid that is contained between the first electrode and the diaphragm and that is present in contact with the first electrode; and a second electrolyte liquid that is contained between the second electrode and the diaphragm and that is present in contact with the second electrode, wherein the first electrolyte liquid contains: the compound represented by the formula (1) or a salt thereof; and water.

7. The carbon dioxide concentrator according to claim 6, wherein the first electrolyte liquid and the second electrolyte liquid are electrolyte liquids different from each other.
